**Europäisches Patentamt**

**European Patent Office**

**Office européen des brevets**

(19)

(11) Veröffentlichungsnummer : **0 288 752 B1**

# EUROPÄISCHE PATENTSCHRIFT

(12)

(45) Veröffentlichungstag der Patentschrift :
24.07.91 Patentblatt 91/30

(51) Int. Cl.⁵ : **B60R 16/02, H01B 7/00**

(21) Anmeldenummer : **88104833.4**

(22) Anmeldetag : 25.03.88

(54) **Kabelbaum, insbesondere für Kraftfahrzeuge.**

(30) Priorität : 31.03.87 DE 3710642

(43) Veröffentlichungstag der Anmeldung :
02.11.88 Patentblatt 88/44

(45) Bekanntmachung des Hinweises auf die
Patenterteilung :
24.07.91 Patentblatt 91/30

(84) Benannte Vertragsstaaten :
DE ES FR GB IT SE

(56) Entgegenhaltungen :
DE-A- 1 415 609
DE-A- 3 048 008
DE-A- 3 150 220
DE-A- 3 337 596
FR-A- 2 219 611

(73) Patentinhaber : Leonische Drahtwerke AG
Marienstrasse 7
W-8500 Nürnberg 1 (DE)

(72) Erfinder : Reichinger, Gerhard
Schwabacher Str. 16
W-8540 Rednitzhembach (DE)

(74) Vertreter : Tergau, Enno et al
Patentanwälte Tergau & Pohl Postfach 11 93
47 Hefnersplatz 3
W-8500 Nürnberg 11 (DE)

**Beschreibung**

Insbesondere bei der Montage von Automobilen ist es üblich, die elektrischen Anschlüsse in Form eines vorkonfektionierten Kabelbaums herzustellen. Der Kabelbaum wird dann in die Karosserie eingezogen bzw. mit der Karosserie verbunden, wobei die Anschlüsse an den entsprechenden Aggregat-Positionen liegen. Die vorgefertigte Karosserie enthält bzw. bildet bereits "Schienen" bzw. Kanäle für die Solleinlage der Kabelbäume. Ein Problem besteht jedoch besonders an den extremen Positionen, die dem Witterungseinfluß (Wasser, Feuchtigkeit, Schmutz pp) ausgesetzt sind, z.B. im Radkastenbereich oder Motorraumbereich. Um dort einen gewissen Schutz auch für den vorkonfektionierten Kabelbaum zu gewähren, ist es bekannt, an Stellen, wo die Karosserie selbst keinen genau definierten Kanal bzw. keine Einlageschiene für den Kabelbaum bietet, Kunststoff-Kabelschächte bzw. -Halter anzumontieren, in diese dann den Kabelbaum einzulegen und diese Halter mittels eines aufschnappbaren Deckels zu verschließen. Diese Kabelschächte sind ähnlich aufgebaut wie die bekannten Kabelschächte für die Elektroinstallation in der Bauindustrie.

Es ist weiterhin bekannt, daß im Zuge der Komfortwelle sowie der technischen Perfektionierung im Automobilbau immer mehr elektrische Leitungen benötigt werden. Hier tritt ein ganz besonderes Problem der Störanfälligkeit insbesondere im Bereich der Kabelführungen durch Feuchtigkeitseinfluß auf. Je mehr Kabel eng aneinanderliegen, um so höher sind die Kapillarwirkungen, die zu Störungen durch Feuchtigkeitseinfluß führen. Diese Störeinflüsse werden durch die eingangs genannte Kabelbaum- Führungstechnik nicht beseitigt, sondern eher begünstigt, weil hier noch viele Lufthohlräume neben dem Kabelbaum oder sogar im Kabelbaum vorhanden sind. Außerdem erfordert die Montage dieser Kabelschächte zusätzliche Handreichungen, was auch wieder die Störeinflußmöglichkeiten vergrößert.

Bei einer aus DE-A1-33 37 596 bekannten Kabelanordnung für das elektrische Bordnetz von Kraftfahrzeugen sind mehrere auch unterschiedlich lange elektrische Leitungen zu einer von Handhabungsautomaten verlegbaren Einheit zusammengefaßt. Der die Leitungen umschließende Schaumkörper ist mit Versteifungseinlagen versehen. Diese sollen der Einheit in gewissen Bereichen eine das maschinelle Einlegen in karosserieseitige Vertiefungen zulassende Formsteife verleihen. Die Versteifungen bestehen beispielsweise aus Glasfaser oder Stahl oder aus einem mäanderförmigen Strangprofil, nämlich aus gegenüber dem die Leitungen umhüllenden Schaumstoff werkstofffremden Teilen. Die Versteifungen wirken etwa nach Art von in den Schaumstoff eingesetzten Korsettstangen als Fremdkörper. Sie nehmen für ihre Unterbringung Querschnittsfläche des Kabelbaumes in Anspruch, die für die Leitungsunterbringung verlorengeht. Außerdem stellen die gegenüber dem Schaumkörper werkstofffremden Versteifungen als Fremdkörper eine Gefahr für die Isolierungen der Leitungen dar. Schließlich wird durch die separaten Versteifungen die Homogenität des die Leitungen umgebenden Schaumkörpers und damit die Wasserdichtheit der Umschließung der Leitungen beeinträchtigt.

Der Erfindung liegt die Aufgabe zugrunde, einen Kabelbaum der vorbekannten Art zu schaffen, bei welchem die für eine Verlegbarkeit durch Handhabungsautomaten erforderliche Formsteife in partiellen Bereichen nicht durch gegenüber dem Schaumkörper werkstofffremde Teile erzielt wird.

Die Lösung der Aufgabe besteht in den Merkmalen des Anspruches 1. Einerseits behält dieser Kabelbaum die bekannten Vorteile der einbaufertigen Vorkonfektionierung, wobei der Formkörper auch die Funktion eines Montagehilfsteils aufweist. Die Kabelbaum-Abzweigungen können so in den Formkörper eingebettet sein, daß sie mit ihren Sollrichtungen vom Kabelbaum abstehen und mit ihren Montageenden in den Überdeckungsbereich der Gegenanschlußstelle des jeweiligen Aggregats am Fahrzeug hineinreichen. Der Formkörper kann so gestaltet sein, daß eine vorgegebene Zwangsführung im Kabelkanal des Einbauobjektes gewährleistet ist. Auch können bereits am Formkörper die späteren Befestigungsmittel angeordnet oder vormontiert sein. Durch die nebeneinander oder miteinander erfolgende Verwendung von entsprechend weichen oder festen Kunststoffen mit hoher oder geringer Elastizität ist es möglich, Sollbiegebereiche beispielsweise auch für eine raumsparende Verpackung beim Versand vorzusehen, während in der Nähe der Sollmontagestellen der Formkörper beispielsweise aus sehr festen Kunststoffen mit geringer Elastizität bestehen und dadurch dort eine hohe Maßhaltigkeit gewährleisten kann. Diese Gestaltungen sind ohne Beeinträchtigung der Größe der für die Leitungsdurchführung zur Verfügung stehenden Querschnittsfläche der gesamten Einheit möglich.

Im Bereich der Leitungsanschlüsse kann auch ein härterer Kunststoff verwendet werden, um eine möglichst konstante Einhaltung der Soll- -Abstehrichtung der Anschlüsse zu gewährleisten.

Schließlich ist es auch möglich, auf den Formkörper weiche Kunststoffwerkstoffe zur Unterdrückung der Dröhnneigung von Karosserien bzw. zur Geräuschdämpfung anzuordnen. Schließlich ist ein wichtiges Merkmal, daß — auch zur Unterdrückung von Dröhnneigungen — der Kabelbaum-Formkörper direkt als Negativ zu dem Unterbringungsbereich an der Karosserie ausgebildet werden kann. Dies hätte auch den Vorteil, daß dort die Ansammlung von Feuchtigkeit oder Wasser verhindert wird, was wiederum die Karosserie gegen Rostanfälligkeit zu schützen vermag. Außerdem kann dadurch der Formkörper gegebenenfalls auch mit der Karosserie großflächig verklebt werden.

Es kann der Formkörper auch dreidimensional in ganz einfacher Weise jede gewünschte Sollform aufweisen, die den Karosserie-Gegebenheiten angepaßt ist.

Ein wichtiges Problem ist gerade im Kraftfahrzeugbau die Flammhemmung. Dem kann durch die Wahl des Kunststoff-Werkstoffes für den Kabelbaum-Formkörper entsprochen werden.

Vorstehend ist davon gesprochen, daß im Kabelanschluß-Ausleitungsbereich aus dem Kabelbaum das Kabelbaum-Führungsteil aus einem relativ harten Kunststoff besteht, um schon eine Sollrichtung für beispielsweise eine Roboter-Montage festzulegen. Umgekehrt gibt es aber auch Fälle, in denen gerade dort eine erhöhte Flexibilität gewünscht ist für spätere Reparaturen an einem dem Kabelbaum-Formkörper benachbarten Aggregat. Hier ist beispielsweise an Anschlüsse für geregelte Katalysatoren zu denken. Bekanntlich ist ein Auspuffrohr bzw. ein Katalysator ein Teil, welches während seiner Lebensdauer wahrscheinlich einer Reparatur ausgesetzt ist oder ausgewechselt werden muß.

Der Gegenstand der Erfindung wird anhand eines in der Fig. dargestellten Ausführungsbeispieles erläutert, die einen erfindungsgemäß ausgestalteten Kabelbaum in perspektivischer Ansicht zeigt.

In dem insgesamt mit 1 bezeichneten Stammbereich des Kabelbaums ist eine Vielzahl von Leitungen auch unterschiedlicher Längen zusammengefaßt, von welchem Stammbereich 1 die Leitungen mit ihren Leitungsanschlüssen nach Art etwa von Ästen abstehen.

Der Stammbereich 1 ist mindestens teilweise von einem Formkörper 9 aus Vollmaterial, insbesondere aus Kunststoff, ortsfest und wasserdicht umfaßt, dessen Außenkontur der Kontur von Oberflächenbereichen seiner Montagefläche am Einbauobjekt angepaßt ist. Der Formkörper 9 ist bereits mit vorgefertigten Schraublöchern 10 oder vormontierten Befestigungsschrauben 11, Nieten, Klebeflächen oder dergleichen versehen.

Im Bereich 12 z.B. der Abzweigung des Leitungsanschlusses 2 kann der Formkörper 9 so ausgebildet sein, daß der Leitungsanschluß 2 in einer vorbestimmten Sollrichtung, z.B. im Winkel 13 vom Stammbereich 1 bzw. vom Formkörper 9 absteht. Es kann in diesem Bereich der Formkörper 12 z.B. durch entsprechende Werkstoffwahl auch so ausgestaltet sein, daß der Leitungsanschluß 2 weitgehend ungehindert, z.B. elastisch vom Formkörper 1 abbiegbar ist. Überhaupt kann — je nach den gewünschten Gegebenheiten und Forderungen des Einbauobjekts — der Formkörper 9 in unterschiedlichen Bereichen aus Werkstoffen unterschiedlicher Elastizität und/oder Festigkeit gefertigt sein.

Auch ist es möglich, den Formkörper aus schwingungsdämpfenden Werkstoffen herzustellen oder ihn mit solchen Werkstoffen zu beschichten.

Bezugszeichen

| 1 | Stammbereich |
|---|---|
| 2 | Leitungsanschluß |
| 3 | Leitungsanschluß |
| 4 | Leitungsanschluß |
| 5 | Leitungsanschluß |
| 6 | Leitungsanschluß |
| 7 | Leitungsanschluß |
| 8 | Leitungsanschluß |
| 9 | Formkörper |
| 10 | Schraublöcher |
| 11 | Befestigungsschraube |
| 12 | Bereich |
| 13 | Winkel |

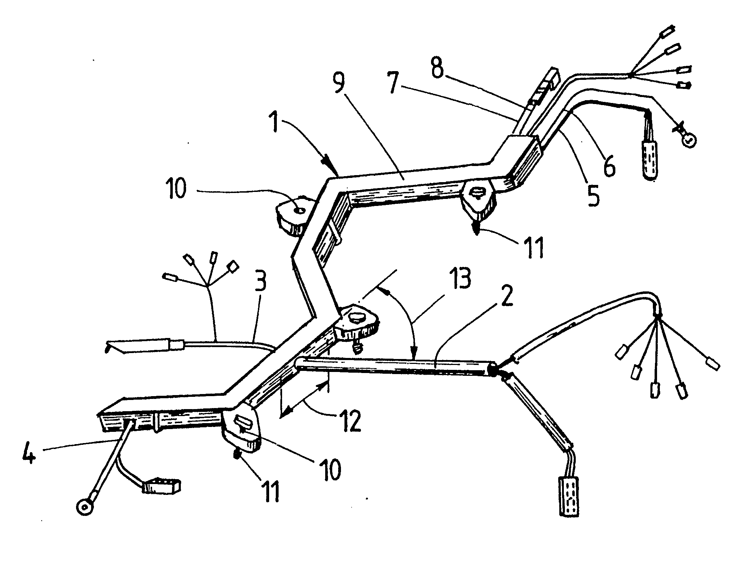

**Patentansprüche**

1. Insbesondere für den Einbau in Kraftfahrzeugkarosserien bestimmter Kabelbaum mit einer Vielzahl von Leitungen auch unterschiedlicher Längen,
— die in einem Stammbereich (1) zusammengefaßt,
— von ihm mit ihren Leitungsanschlüssen (2-8) nach Art etwa von Ästen abgeleitet und
— von einem Formkörper (9) aus Kunststoff umfaßt sind,
   — - dessen Außenkontur der Kontur von Oberflächenbereichen seiner Montagefläche am Einbauobjekt angepaßt ist,
wobei der Formkörper (9) ortsfest und wasserdicht ohne von außen zugängliche Hohlräume um die Leitungen herumgespritzt oder herumgegossen ist, dadurch gekennzeichnet, daß der Formkörper (9)
— in Sollbiegebereichen aus weichen Kunststoffen mit hoher Elastizität und
— in vorgefertigten Montagebereichen aus festen Kunststoffen mit geringer Elastizität gefertigt ist.

2. Kabelbaum nach Anspruch 1, dadurch gekennzeichnet, daß der Formkörper (9) mit vorgefertigten und/oder vormontierten Montagehilfen wie Schraublöchern (10), Befestigungsschrauben (11), Nieten, Klebeflächen oder dergleichen versehen ist.

3. Kabelbaum nach Anspruch 1 oder 2, gekennzeichnet durch eine Ausgestaltung des Formkörpers (9) im Bereich der Abzweigungen derart, daß die Leitungsanschlüsse (2) der abgezweigten Leitungsenden in einer vorbestimmten Sollrichtung vom Stammbereich abstehen.

4. Kabelbaum nach einem oder mehreren der vorhergehenden Ansprüche, gekennzeichnet durch eine Ausgestaltung des Formkörpers (9) im Bereich der Abzweigungen derart, daß die Leitungsanschlüsse (2) der abgezweigten Leitungsenden weitgehend ungehindert, z.B. elastisch vom Formkörper (9) abbiegbar sind.

5. Kabelbaum nach einem oder mehreren der vorhergehenden Ansprüche, dadurch gekennzeichnet, daß der Formkörper aus schwingungsdämpfenden Werkstoffen besteht oder mit solchen beschichtet ist.

6. Kabelbaum nach einem oder mehreren der vorhergehenden Ansprüche, gekennzeichnet durch einen eine großflächige Verklebbarkeit mit dem Einbauobjekt ermöglichende Gestaltung oder Werkstoffeigenschatt mindestens eines Oberflächenteils des Formkörpers (9).

**Revendications**

1. Faisceau de câbles destiné en particulier à être monté dans des carrosseries de véhicules automobiles, comportant une pluralité de conducteurs pouvant être de longueurs différentes,
— qui sont réunis dans un domaine formant tronc (1),
— qui se séparent de lui par leurs raccordements de conducteurs (2-8) sensiblement à la manière de branches et
— qui sont entourés par une pièce moulée (9) en matière plastique,
- - dont le contour externe est adapté au contour de domaines superficiels de sa surface de montage sur l'objet sur lequel elle doit être montée,
la pièce moulée (9) étant formée par pulvérisation ou moulage autour des conducteurs, de manière fixe en position et étanche à l'eau, sans cavités accessibles de l'extérieur, caractérisé en ce que la pièce moulée (9) est constituée
— par des matières plastiques molles de grande élasticité dans les domaines destinés à la flexion et
— par des matières plastiques rigides de faible élasticité dans les domaines de montage préfabriqués.

2. Faisceau de câbles selon la revendication 1, caractérisé en ce que la pièce moulée (9) est munie d'auxiliaires de montage préfabriqués et/ou prémontés tels que des trous de vis (10), des vis de fixation (11), des rivets, des surfaces de collage ou analogues.

3. Faisceau de câbles selon la revendication 1 ou 2, caractérisé par un agencement de la pièce moulée (9) dans le domaine des ramifications tel que les raccordements de conducteurs (2) des extrémités ramifiées des conducteurs s'écartent du domaine du tronc suivant une direction prédéterminée.

4. Faisceau de câbles selon une ou plusieurs des revendications précédentes, caractérisé par un agencement de la pièce moulée (9) dans le domaine des ramifications tel que les raccordements de conducteurs (2) des extrémités ramifiées des conducteurs peuvent être courbés par rapport à la pièce moulée (9) largement librement, par exemple de manière élastique.

5. Faisceau de câbles selon une ou plusieurs des revendications précédentes, caractérisé en ce que la pièce moulée consiste en des matériaux amortissant les oscillations ou est revêtue de tels matériaux.

6. Faisceau de câbles selon une ou plusieurs des revendications précédentes, caractérisé par un agencement ou des propriétés des matériaux d'au moins une partie de la surface de la pièce moulée (9) permettant une fixation sur l'objet sur lequel il doit être monté par collage sur de grandes surfaces.

**Claims**

1. A cable harness intended in particular for installation in motor vehicle bodies, with a plurality of leads of different lengths, which are
— bundled in a trunk zone (1)
— led off therefrom with their lead connections (2-8) approximately in the manner of branches and
— which are surrounded by a shaped body (9) made of a synthetic material
- - whose outer contour is adapted to the contour of surface zones of its face for assembly on the built in element,
the shaped body (9) being injection moulded or cast around the leads, being fixed in position and watertight, without any cavities being accessible from the outside, characterized in that the shaped body (9) is made
— of pliable synthetic materials with a high degree of elasticity in zones intended to be bent and
— of rigid synthetic materials with a low degree of elasticity in prefabricated assembly zones.

2. A cable harness according to claim 1, characterized in that the shaped body (9) is provided with prefabricated and/or prefitted aids for assembly, such as screw holes (10), fixing screws (11), rivets or similar.

3. A cable harness according to claim 1 or 2 characterized by a design of the shaped body (9) in the zone of the branches such that the lead connections (2) of the branched lead ends project from the trunk zone in a predetermined direction.

4. A cable harness according to one or more of the preceding claims, characterized by a design of the shaped body (9) in the zone of the branches such that the lead connections (2) of the branched lead ends can be bent away from the shaped body (9) in a largely unimpeded manner, for example, elastically.

5. A cable harness according to one or more of the preceding claims, characterized in that the shaped body consists of materials for damping vibrations or is coated with them.

6. A cable harness according to one or more of the preceding claims, characterized by a design or property of the material of at least one surface portion of the shaped body (9), providing a large area for bonding to the built in member.